# EUROPEAN PATENT SPECIFICATION

(11) **EP 2 254 028 B1**
(45) Date of publication and mention of the grant of the patent: **27.09.2017**
(21) Application number: 10176251.6
(22) Date of filing: 27.02.2004
(51) Int. Cl.: G06F 3/033, G06F 3/023, G06F 3/048

(54) **Text input system for a mobile electronic device and methods thereof**
Texteingabesystem sowie -verfahren für ein elektronisches Mobilgerät
Système de saisie de texte pour un dispositif électronique mobile et procédés associés

(43) Date of publication of application: 24.11.2010
(62) Divisional of application: 04251161.8
(73) Proprietor: BlackBerry Limited, Waterloo, ON N2K 0A7 (CA)
(72) Inventor: Griffin, Jason Tyler, Waterloo Ontario N2L 3W8 (CA)
(74) Representative: Fennell, Gareth Charles

(56) References cited:
- US-A- 5 748 512
- US-B1- 6 259 436

## Description

### FIELD OF THE INVENTION

The present invention relates generally to mobile electronic devices having text input.

### BACKGROUND OF THE INVENTION

Many mobile electronic devices now include functionality that requires text input, such as, for example, sending e-mail, writing short message service (SMS) messages, browsing the Internet, entering data into applications such as contacts, notes, task list, and calendars, etc. Many different text input systems are currently available, and some mobile electronic devices provide more than one text input system. A non-exhaustive list of text input systems in mobile electronic devices includes, for example, a) a virtual keyboard from which text is entered by selecting keys using a narrow-tipped stylus; b) a QWERTY thumbboard; and c) nine number keys for the numbers 1-9, where typically up to three or four letters are associated with a particular number key. In the latter example, text is entered by pressing the number key associated with the desired letter, for example, using multi-tap, long-press, and similar techniques, or by pressing the number key only once (and possibly pressing additional keys) and using a predictive text algorithm such as, for example, "text on nine keys" (T9®) from Tegic Communications Inc. of Seattle, Wash., iTAP® from the Lexicus Division of Motorola in Mountain View, Calif. or LetterWise from Eatoni Ergonomics Inc. of New York, N.Y.

US 5,748,512 discloses a method for selecting a character for entry when a key of the keyboard is struck off center. If a user's contact point on the keyboard is within a distance of 0.2 of the width of a key from the center point of the key, a touch is considered a "direct hit" and the character represented by the key that has been directly hit is selected. If the touch contact point is not within a distance of 0.2 of the width of a key from the center point of a key, the method operates to select the most appropriate character based on the occurrence frequency and the location of the contact point of the user's touch.

Since many mobile electronic devices are handheld, it may be beneficial to reduce their size.

### SUMMARY OF THE INVENTION

One aspect provides a method comprising: associating areas of a touch interface of a mobile electronic device with characters, wherein at least some of the associated areas overlap with one another to form intermediate regions that represent more than one character; detecting a location of a touch on the touch interface; for each area of the touch interface which includes the location, identifying the character associated therewith; wherein for a first character, the associating comprises associating an area of the touch interface with the first character by joining the centers of characters nearest to the first character.

When two or more characters are identified, predictive text software may be used to select one of the characters.

The method may comprise: providing the predictive text software with an indication that the location is closer to one of the identified characters than to others of the identified characters.

The method may further comprise: providing the predictive text software with an indication of how much closer the location is to one of the identified characters than to others of the identified characters.

Another aspect provides a computer-readable medium having computer-readable code executable by at least one processor of a device to perform the above method.

Another aspect provides an electronic device comprising: one or more touch interfaces to receive a touch by a user; a display that displays one or more rows of characters; a microprocessor configured to: associate areas of the one or more touch interfaces with the characters, wherein at least some of the areas overlap with one another to form intermediate regions that represent more than one character; identify which characters are associated with the areas of the one or more touch interfaces that include a location of the touch; wherein, for a first character, an area of the one or more touch interfaces associated with the first character is bounded by joining the centers of characters nearest to the first character.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:
FIG. 1 is a simplified front view of an exemplary mobile electronic device;
FIG. 2 is a simplified front view of another exemplary mobile electronic device;
FIG. 3 is a flowchart illustration of an exemplary method for determining which two adjacent letters to pass to the predictive text software module;
FIG. 4 is an illustration of a virtual "T" key, a virtual "R" key and a virtual "Y" key, in accordance with some embodiments of the present invention;
FIG. 5 is a flowchart illustration of another exemplary method for determining which letter to select as input or which two adjacent letters to pass to the predictive text software module;
FIG. 6 is an illustration of a virtual "T" key, a virtual "R" key and a virtual "Y" key, in accordance with some embodiments of the present invention;
FIG. 7 is a flowchart illustration of an exemplary method for determining which letters to pass to the predictive text software module;
FIGS. 8A and 8B are illustrations of a virtual "G" key in accordance with alternate embodiments of the present invention; and
FIG. 9 is a block diagram of an exemplary mobile electronic device.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the embodiments of the invention. However it will be understood by those of ordinary skill in the art that embodiments of the invention may be practiced without these specific details. In other instances, well-known methods, procedures and components have not been described in detail so as not to obscure the invention.

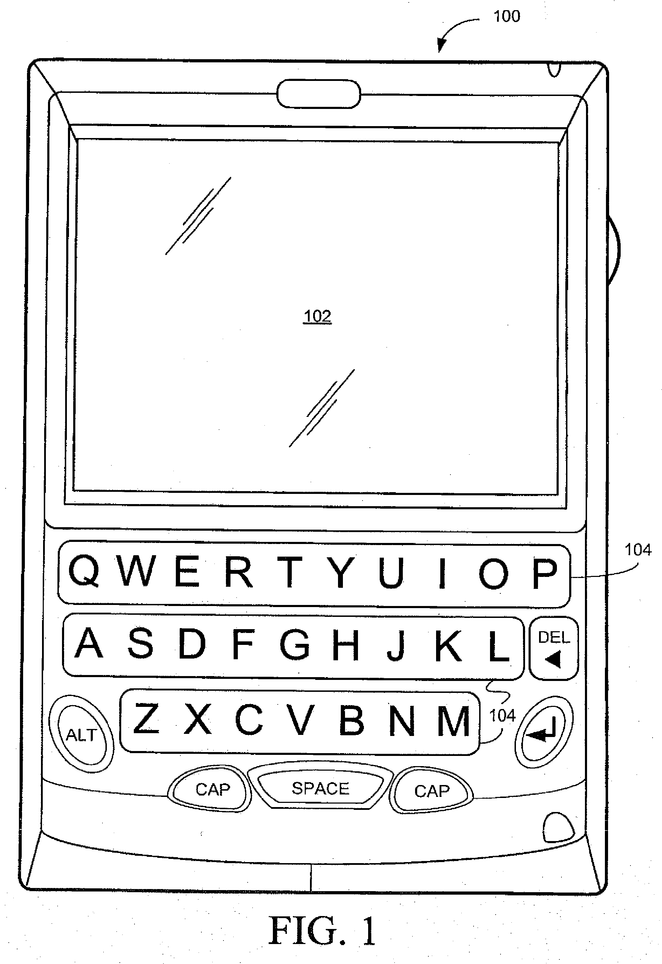

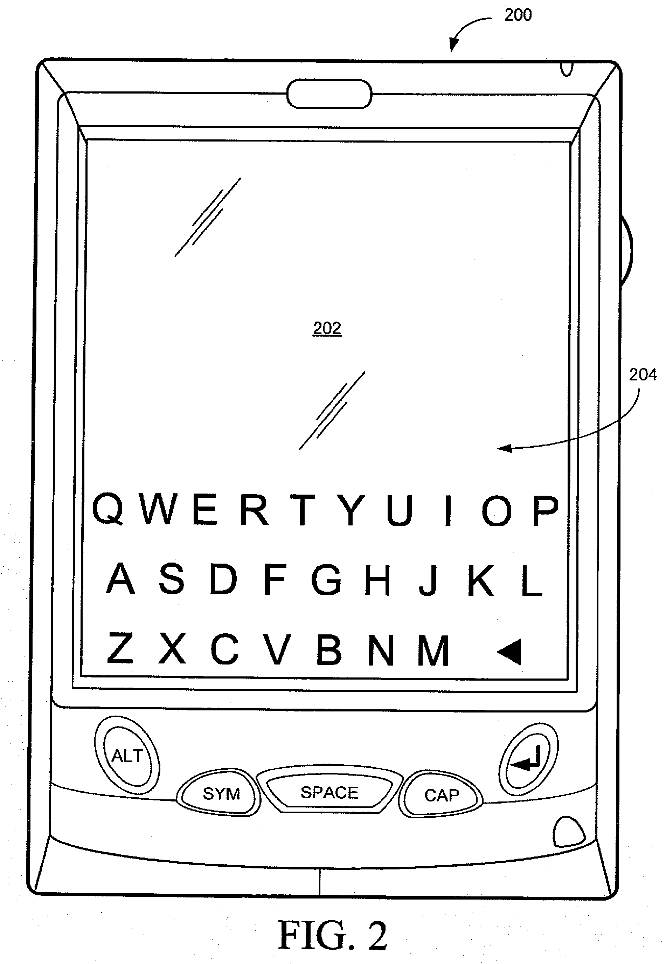

Reference is now made to FIG. 1, which is a simplified front view of an exemplary mobile electronic device 100, and to FIG. 2, which is a simplified front view of another exemplary mobile electronic device 200. Device 100/200 may be a personal data assistant (PDA), a personal information manager (PIM), a two-way pager, a cellphone, a handheld terminal, and the like. In some embodiments, device 100/200 may be a two-way communication device with data communication capabilities having the capability to communicate with other computer systems. In some embodiments, device 100/200 may also include the capability for voice communications.

Device 100/200 may have a display 102/202. A non-exhaustive list of examples for display 102/202 includes a liquid crystal display (LCD) screen and a thin-film-transistor (TFT) LCD screen.

Device 100 may have one or more touch interfaces, including rows of touchpads 104 to allow text input. A non-exhaustive list of examples of touchpads includes, for example, capacitive touchpads and resistive touchpads. The rows may be straight or curved or have any other appropriate shape.

In the example shown in FIG.1, a top touchpad 104 includes the letters "Q", "W", "E", "R", "T", "Y", "U", "I", "O", and "P", a middle touchpad 104 includes the letters "A", "S", "D", "F", "G", "H", "J", "K", and "L", and a bottom touchpad 104 includes the letters "Z", "X", "C", "V", "B", "N", and "M". The letters may be printed directly on the touchpad, or may be located behind or printed on the back of a substantially translucent touchpad. If desired, the letters may be evenly spaced within each touchpad. In other examples, the arrangement of letters among and within the touchpad may be different than that shown in FIG.1. Similarly, in other examples, the number of touchpads may be different than that shown in FIG. 1. Similarly, in other examples, a single large touchpad may include more than one row of letters.

Device 200 may include one or more touch interfaces, including a touchscreen 204. A non-exhaustive list of touchscreens includes, for example, resistive touchscreens, capacitive touchscreens, projected capacitive touchscreens, infrared touchscreens and surface acoustic wave (SAW) touchscreens.

In the example shown in FIG. 2, letters are arranged in rows in touchscreen 204. The letters may be printed directly on display 202. Touchscreen 204 may be transparent and placed in front of display 202, or alternatively, touchscreen 204 may be behind display 202. If desired, the letters may be evenly spaced within each row. In other examples, the arrangement of letters among and within the rows may be different than that shown in FIG. 2. Similarly, in other examples, the number of rows of letters in the touchscreen may be different than that shown in FIG. 2.

When a user of device 100 touches one of the touchpads 104, the touchpad will determine the location of the touch on the touchpad. The way in which the location is determined and the precision of the location will likely depend on the type of touchpad. Similarly, when a user of device 200 touches touchscreen 204, the touchscreen will determine the location of the touch on the touchscreen. The way in which the location is determined and the precision of the location will likely depend on the type of touchscreen.

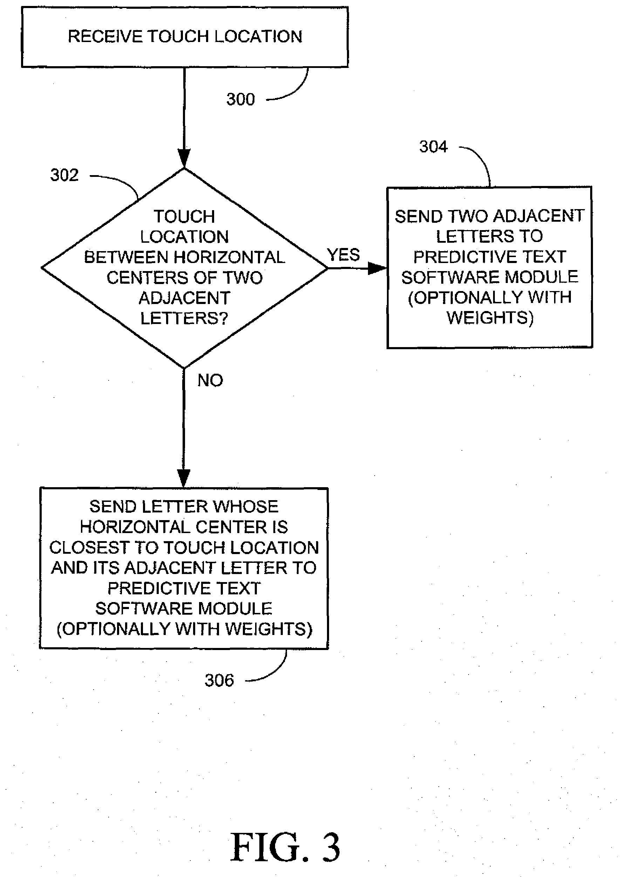

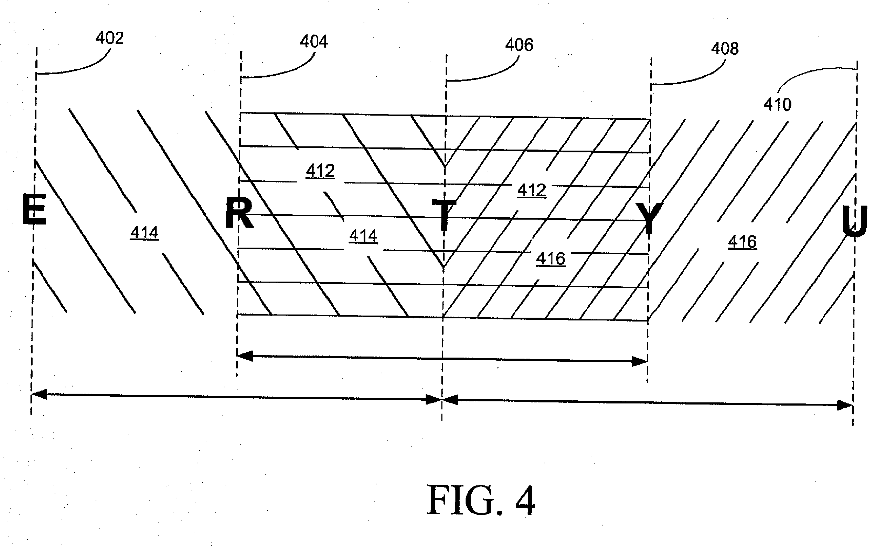

In one embodiment, described hereinbelow with respect to FIGS. 3 and 4, each touch results in the selection of two adjacent letters to be passed to a predictive text software module. The predictive text software module is to determine which of the two adjacent letters the user intended to enter. A force feedback system (for example, a vibrator) or an audio system may be used to provide feedback to the user to indicate to the user that the software has registered an input.

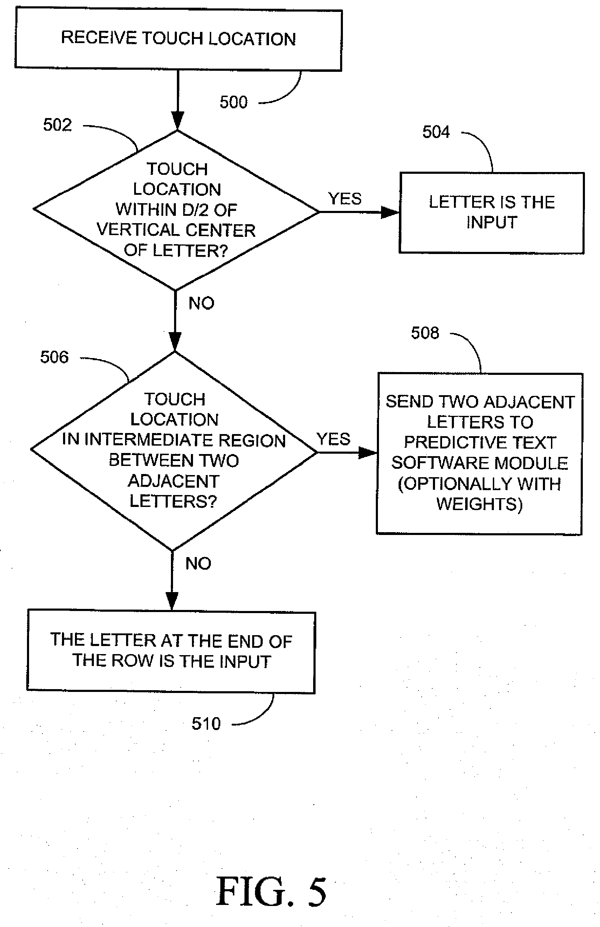

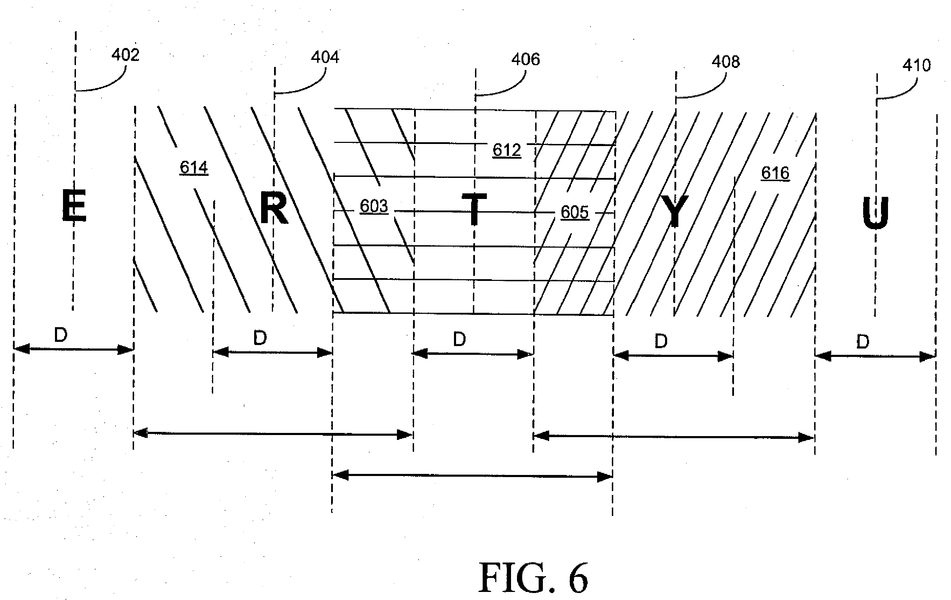

In another embodiment, described hereinbelow with respect to FIGS. 5 and 6, a touch sufficiently close to the horizontal center of a letter results in the selection of that letter, while a touch in an intermediate area between two adjacent letters results in the selection of the two adjacent letters and passing the two adjacent letters to a predictive text software module. The predictive text software module is to determine which of the two adjacent letters the user intended to enter. A force feedback system (for example, a vibrator) or an audio system may be used to provide feedback to the user to indicate to the user that the software has registered an input.

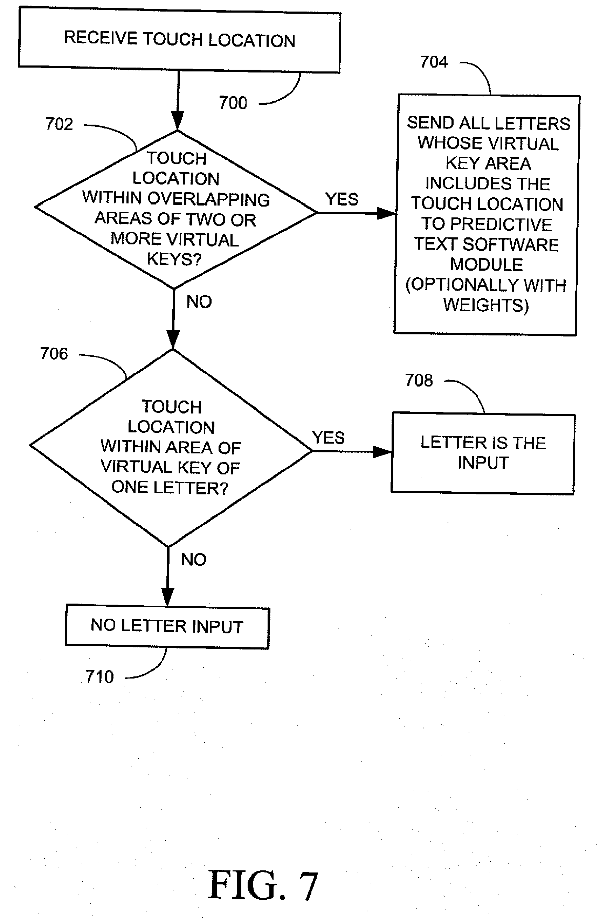

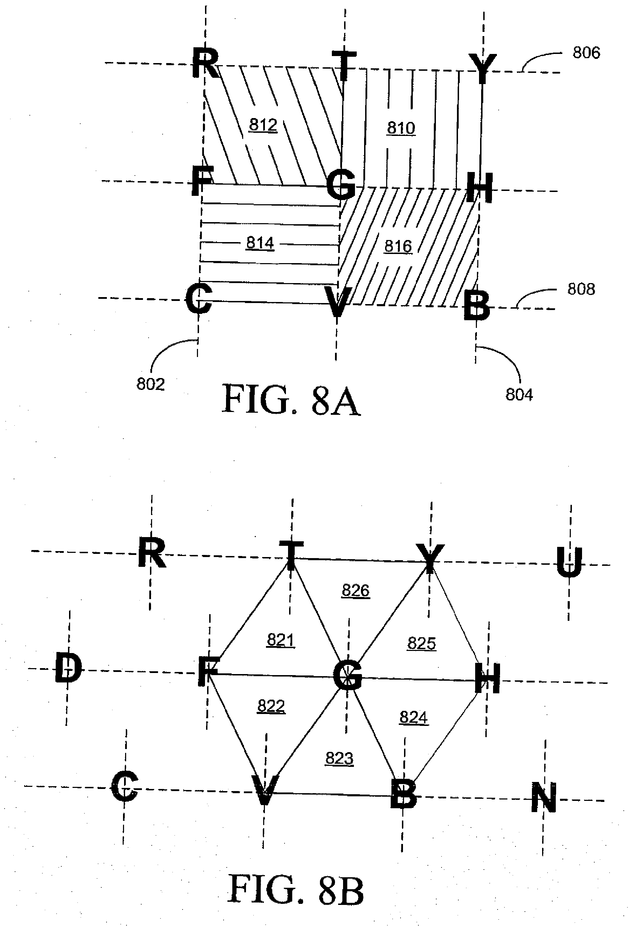

The embodiments described hereinbelow with respect to FIGS. 3 - 6 are applicable to device 100. They are applicable as well to device 200 if the rows of letters are spaced at a sufficient vertical distance that there is no ambiguity as to which row of letters is being touched. Further embodiments, described hereinbelow with respect to FIGS. 7 and 8, are applicable to device 200 if the rows of letters are spaced such that there is ambiguity as to which row of letters is being touched.

Reference is now made to FIGS. 3 and 4. FIG. 3 illustrates an exemplary method for determining which two adjacent letters to pass to the predictive text software module. FIG. 4 is an illustration of a virtual "T" key, a virtual "R" key and a virtual "Y" key, in accordance with some embodiments of the present invention. A touch location is received (300). If the touch location is between the horizontal centers of two adjacent letters (302), then the two adjacent letters are sent to the predictive text software module (304). For example, as shown in FIG. 4, if the touch location is between the horizontal center of "R" 404 and the horizontal center of "T" 406, then the letters "R" and "T" will both be passed to the predictive text software module, whereas if the touch location is between the horizontal center of "T" 406 and the horizontal center of "Y" 408, then the letters "T" and "Y" will both be passed to the predictive text software module. In this embodiment, a touch location should not be precisely at the horizontal center of a letter. This may be accomplished, for example, by requiring the touch location to be at one of a set of vertical lines and ensuring that the vertical lines are not aligned with the horizontal centers of the letters.

If the touch location is not between the horizontal centers of two adjacent letters (302), then the touch location is between the horizontal center of a letter at the end of a row and the corresponding edge of the touchpad/touchscreen. In this case, the letter whose horizontal center is closest to the touch location and its adjacent letter are sent to the predictive text software module (306). For example, if the touch location is between the horizontal center of "Q" and the edge of the touchpad/touchscreen nearest to the letter "Q", then the letters "Q" and "Y" will both be passed to the predictive text software module.

In some embodiments, the two adjacent letters sent to the predictive text software module in block 304 or block 306 may be sent with one or more numerical weights indicating that the touch location is closer to one of the two adjacent letters than to the other, or indicating how much closer the touch location is to one of the two adjacent letters than to the other. The predictive text software module may take these numerical weights into account when determining which of the two adjacent letters the user intended to enter.

As shown in FIG. 4, a virtual "T" key has an area 412, marked with horizontal hatching, which extends from the horizontal center of "R" 404 to the horizontal center of "Y" 408. Similarly, a virtual "R" key has an area 414, marked with wide diagonal hatching, which extends from the horizontal center of "E" 402 to the horizontal center of "T" 406, and a virtual "Y" key has an area 416, marked with narrow diagonal hatching, which extends from the horizontal center of "T" 406 to the horizontal center of "U" 410. The area 412 of the virtual "T" key is completely overlapped jointly by a portion of the area 414 of the virtual "R" key and a portion of the area 416 of the virtual "Y" key.

The touchpads of FIG. 1 may be designed so that the area of a virtual key (e.g. the area of the touchpad associated with a particular letter) is of an appropriate ergonomic size, shape and orientation for use by a finger or thumb. If Δ denotes the minimum horizontal length of a virtual key based on ergonomic considerations, then the overall horizontal length of a touchpad need not exceed (*n*+1)Δ/2, where *n* is the number of letters in the touchpad. In the example of device 100 shown in FIG. 1, *n* is 10 for the top touchpad, *n* is 9 for the middle touchpad and *n* is 7 for the bottom touchpad.

Similarly, the touchscreen of FIG. 2 may be designed so that the area of a virtual key is of an appropriate ergonomic size, shape and orientation for use by a finger or thumb. If Δ denotes the minimum horizontal length of a virtual key based on ergonomic considerations, then the overall horizontal length of a touchscreen need not exceed (*n*+1)Δ/2, where *n* is the number of letters in the row of the touchscreen having the most letters. In the example of device 200 shown in FIG. 2, *n* is 10, since the top row has the most letters.

In contrast, if each touch of the touchpad/touchscreen were to select only a single letter, then the areas of the virtual keys would not be permitted to overlap and the overall horizontal length of the touchpad/touchscreen would have to be sufficient to accommodate this restriction while providing virtual key areas of an appropriate size for use by a finger or thumb. If Δ denotes the minimum horizontal length of a virtual key based on ergonomic considerations, then the overall horizontal length of a touchpad/touchscreen having virtual keys that are not permitted to overlap would need to be at least *n*Δ, where *n* is the number of letters in the touchpad or the number of letters in the row of the touchscreen having the most letters.

Reference is now made to FIGS. 5 and 6. FIG. 5 illustrates another exemplary method for determining which two adjacent letters to pass to the predictive text software module. FIG. 6 is an illustration of a virtual "T" key, a virtual "R" key and a virtual "Y" key, in accordance with some embodiments of the present invention.

A touch location is received (500). If the touch location is within a predetermined distance *D*/*2* of the horizontal centers of a letter (502), then the letter is the input (504). For example, as shown in FIG. 6, if the touch location is within *D*/*2* of the horizontal center of "R" 404, then the input is "R". If the touch location is within *D*/*2* of the horizontal center of "T" 406, then the input is "T". If the touch location is within *D*/*2* of the horizontal center of "Y" 408, then the input is "Y".

However, if the touch location is not within the predetermined distance *D*/*2* of the horizontal center of a letter, then it is checked whether the touch location is in an intermediate region between two adjacent letters (506). If so, then the two adjacent letters are sent to the predictive text software module (508). For example, as shown in FIG. 6, if the touch location is in an intermediate area 603 between "R" and "T", then the letters "R" and "T" will both be passed to the predictive text software module. If the touch location is in an intermediate area 605 between "T" and "Y", then the letters "T" and "Y" will both be passed to the predictive text software module.

If the touch location is not in an intermediate region between two adjacent letters (506), then the touch location is between the horizontal center of a letter at the end of a row and the corresponding end of the touchpad. The letter at the end of the row is then unambiguously the input (510).

As shown in FIG. 6, the virtual "T" key has an area 612, marked with horizontal hatching, which extends from the left edge of intermediate area 603 to the right edge of intermediate area 605. Similarly, the virtual "R" key has an area 614, marked with wide diagonal hatching, which extends from the right edge of intermediate area 603 to within *D*/*2* of the horizontal center of "E" 402, and the virtual "Y" key has an area 616, marked with narrow diagonal hatching, which extends from the left edge of intermediate area 605 to within *D*/*2* of the horizontal center of "U" 410. The areas of the virtual keys partially overlap to define the intermediate areas.

If Δ denotes the minimum horizontal length of a virtual key based on ergonomic considerations, then the overall horizontal length of a touchpad/touchscreen may be larger than (*n*+1)Δ/2 but less than *n*Δ, where *n* is the number of letters in the touchpad or the number of letters in the row of the touchscreen having the most letters. The actual overall horizontal length will depend upon the extent of overlap of the areas of the virtual keys.

Reference is now made to FIGS. 7, 8A and 8B. FIG. 7 is a flowchart illustration of an exemplary method for determining which letters to pass to the predictive text software module. FIGS. 8A and 8B are illustrations of a virtual "G" key in accordance with alternate embodiments of the present invention.

A touch location is received (700). If the touch location is within overlapping areas of two or more virtual keys (702), then all letters whose virtual key area includes the touch location are selected and sent to the predictive text software module (704).

In some embodiments, the two or more letters sent to the predictive text software module in block 704 may be sent with one or more numerical weights indicating that the touch location is closer to one of the selected letters than to the others, or indicating how much closer the touch location is to one of the selected letters than to the others. The predictive text software module may take these numerical weights into account when determining which of the selected letters the user intended to enter.

For example, the virtual key of the letter "G" shown in FIG. 8A is defined as the area bounded by the horizontal centers 802 and 804 of the letters "F" and "H", respectively and by the vertical centers 806 and 808 of the letters "R", "T" and "Y", and "C", "V" and "B", respectively. If the touch location is in the region denoted 810, then the letters "G", "T", "Y" and "H" are sent to the predictive text software module. If the touch location is in the region denoted 812, then the letters "G", "T", "R" and "F" are sent to the predictive text software module. If the touch location is in the region denoted 814, then the letters "G", "F", "C" and "V" are sent to the predictive text software module. If the touch location is in the region denoted 816, then the letters "G", "H", "B" and "V" are sent to the predictive text software module. In an alternative embodiment, each touch may result in only three letters being sent to the predictive text software module, such as, for example, the three letters having centers that are closest to the touch location.

In another example, the virtual key of the letter "G" shown in FIG. 8B is defined as the area bounded by the lines joining the centers of the letters nearest to the letter "G". If the touch location is in the region denoted 821, then the letters "G", "T" and "F" are sent to the predictive text software module. If the touch location is in the region denoted 822, then the letters "G", "F" and "V" are sent to the predictive text software module. If touch location is in the region denoted 823, then the letters "G", "V" and "B" are sent to the predictive text software module. If touch location is in the region denoted 824, then the letters "G", "B" and "H" are sent to the predictive text software module. If touch location is in the region denoted 825, then the letters "G", "H" and "Y" are sent to the predictive text software module. If the touch location is in the region denoted 826, then the letters "G", "Y" and "T" are sent to the predictive text software module.

If the touch location is within the area of the virtual key of only one letter (706), then the letter is the input (708). Otherwise, the touch location is not sufficiently close to any of the letters to generate letter input (710).

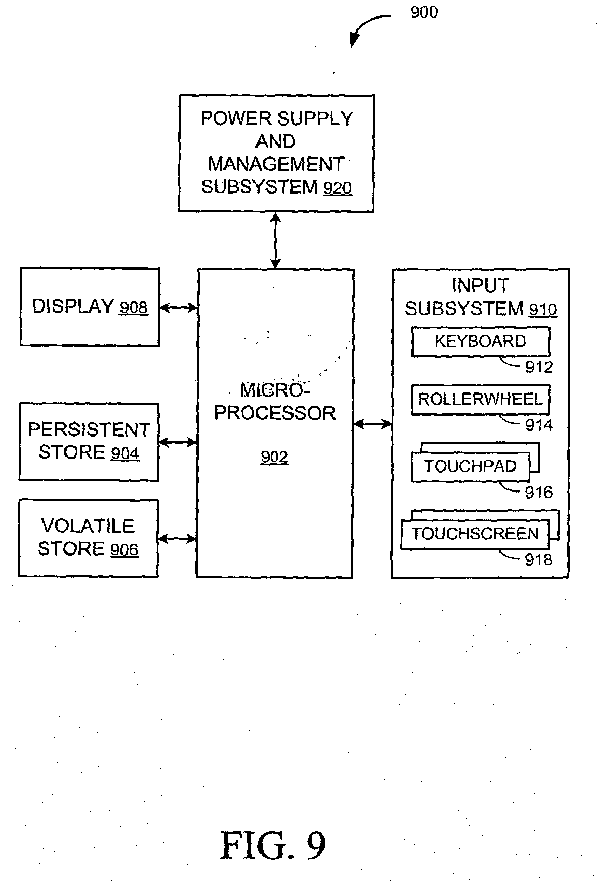

Reference is now made to FIG. 9. FIG. 9 is a block diagram of an exemplary mobile electronic device 900. Device 900 may be a personal data assistant (PDA), a personal information manager (PIM), a two-way pager, a cellphone, a handheld terminal, and the like. In some embodiments, device 900 may be a two-way communication device with data communication capabilities having the capability to communicate with other computer systems. In some embodiments, device 900 may also include the capability for voice communications. Device 100 of FIG. 1 and device 200 of FIG. 2 are examples for device 900.

Device 900 comprises a microprocessor 902 that controls the overall operation of device 900, a persistent store 904, a volatile store 906, a display 908 and an input subsystem 910. Device 900 may comprise additional components that are not shown in FIG. 9 so as not to obscure the description of embodiments of the invention. Operating system software used by microprocessor 902 is typically stored in persistent store 904, such as, for example, flash memory or read-only memory (ROM), programmable ROM (PROM), mask ROM, electrically programmable read-only memory (EPROM), electrically erasable and programmable read only memory (EEPROM), non-volatile random access memory (NVRAM), a magnetic or optical card, CD-ROM, and the like. Microprocessor 902, in addition to its operating system functions, enables execution of software applications on device 900. The operating system, specific device applications, or parts thereof, may be temporarily loaded into volatile store 906, such as for example, random access memory (RAM), static random access memory (SRAM), dynamic random access memory (DRAM), synchronous dynamic random access memory (SDRAM), RAMBUS dynamic random access memory (RDRAM), double data rate (DDR) memory, and the like.

A non-exhaustive list of examples for display 908 includes a liquid crystal display (LCD) screen and a thin-film-transistor (TFT) LCD screen.

Input subsystem 910 may include any of a keyboard 912, a roller wheel 914, one or more touchpads 916, and one or more touchscreens 918, and the like, or any combination thereof.

Device 900 is battery-powered and includes a power supply and management subsystem 920. Although current technology makes use of a battery, future technologies such as micro fuel cells may provide the power to device 900.

The methods described hereinabove and illustrated with respect to FIGS. 3, 5 and 7 may be stored as instructions, for example in persistent store 904, and executed by microprocessor 902 during processing of user input. The predictive text software module referred to hereinabove may also be stored as instructions, for example in persistent store 904, and executed by microprocessor 902. The predictive text software module is to determine which of the selected letters the user intended to enter, as is known in the art, possibly with further input from the user.

Unlike "text on nine keys" (T9), which determines which of three or four letters is the letter that the user intended to enter, in some embodiments of the present invention, only two letters are sent to the predictive text software module. Moreover, in T9, the grouping of letters in groups of three or four is fixed and always the same (e.g. {"A", "B" and "C"}, {"D", "E" and "F"}, {"G", "H" and "I"}, {"J", "K" and "L"}, {"M", "N" and "O"}, {"P", "Q", "R" and "S"}, {"T", "U" and "V"} and {"W", "X", "Y" and "Z"}). In contrast, in embodiments of the invention, the groups of letters sent to the predictive text software module (and in some cases, the number of letters sent) depend upon the touch location (e.g. {"R" and "T"} or {"T" and "Y"}). T9 is generally applicable to physical keys coupled to a switch, while the embodiments of the present invention described hereinabove are applicable to "virtual" keys, for example, on a touchpad or touchscreen. Even in situations where T9 is applied to virtual keys, the virtual keys displayed to the user are such that the letters are presented to the user in fixed groupings.

Unlike reduced QWERTY keyboards, in which letters are paired up to reduce the number of physical keys and therefore the number of switches, in embodiments of the present invention, the appearance of a traditional QWERTY keyboard is preserved. Moreover, reduced QWERTY keyboards always pair the same two letters, while embodiments of the present invention may pair a given letter with either of its adjacent letters (if the given letter is not at the end of a row).

It will be appreciated that although the description of some embodiments of the invention given above is in terms of rows of letters and horizontal centers of letters, in alternative embodiments of the invention, the letters are arranged in columns and the touch location relative to the vertical centers of letters is used to determine which two adjacent letters are to be selected.

While certain features of embodiments of the invention have been illustrated and described herein, many modifications, substitutions, changes, and equivalents will now occur to those of ordinary skill in the art.

## Claims

1. A method comprising:
associating areas (821-826) of a touch interface of a mobile electronic device (200) with characters, wherein at least some of the associated areas (821-826) overlap with one another to form intermediate regions that represent more than one character;
detecting (700) a location of a touch on the touch interface;
for each area (821-826) of the touch interface which includes the location, identifying the character associated therewith;
wherein for a first character, the associating comprises associating an area (821-826) of the touch interface with the first character by joining the centers of characters nearest to the first character.

2. The method of claim 1, further comprising: when two or more characters are identified, using predictive text software to select one of the characters.

3. The method of claim 2, further comprising: providing the predictive text software with an indication that the location is closer to one of the identified characters than to others of the identified characters.

4. The method of claim 2, further comprising: providing the predictive text software with an indication of how much closer the location is to one of the identified characters than to others of the identified characters.

5. A computer-readable medium having computer-readable code executable by at least one processor of a device (200) to perform the method of any preceding claim.

6. The method of claim 1, performed by an electronic device (200).

7. An electronic device (200) comprising:
one or more touch interfaces to receive a touch by a user;
a display (202) that displays one or more rows of characters;
a microprocessor (902) configured to:
associate areas (821-826) of the one or more touch interfaces with the characters, wherein at least some of the areas (821-826) overlap with one another to form intermediate regions that represent more than one character;
identify (700) which characters are associated with the areas (821-826) of the one or more touch interfaces that include a location of the touch;
wherein, for a first character, an area (821-826) of the one or more touch interfaces associated with the first character is bounded by joining the centers of characters nearest to the first character.

8. The electronic device (200) of claim 7, wherein the one or more touch interfaces is a single touchpad.

9. The electronic device (200) of claim 7, wherein the rows of characters are spaced at a sufficient vertical distances that there is no ambiguity as to which row of characters is being touched.

10. The electronic device (200) of claim 7, wherein the one or more touch interfaces are two or more touchpads.

11. The electronic device (200) of claim 7, wherein the one or more touch interfaces is a single touchscreen (204).

12. The electronic device (200) of claim 7, wherein the rows of characters are spaced at a sufficient vertical distances that there is no ambiguity as to which row of characters is being touched.

13. The electronic device (200) of claim 7, wherein, for a first character, an area of the touchscreen (204) associated with the first character is overlapped by an area of the touchscreen (204) associated with a different character of an adjacent row.

## Patentansprüche

1. Verfahren, umfassend:
Zuordnen von Bereichen (821-826) einer Touch-Schnittstelle eines elektronischen Mobilgeräts (200) zu Zeichen, wobei mindestens einige der zugeordneten Bereiche (821-826) einander überlappen, um Zwischenbereiche zu bilden, die mehr als ein Zeichen darstellen;
Erkennen (700) einer Stelle einer Berührung auf der Touch-Schnittstelle;
für jeden Bereich (821-826) der Touch-Schnittstelle, die die Stelle enthält, Ermitteln des diesem zugeordneten Zeichens;
wobei das Zuordnen für ein erstes Zeichen das Zuordnen eines Bereichs (821-826) der Touch-Schnittstelle zu dem ersten Zeichen durch Verbinden der Mitten von Zeichen, die sich am nächsten an dem ersten Zeichen befinden, umfasst.

2. Verfahren nach Anspruch 1, ferner umfassend: wenn zwei oder mehr Zeichen ermittelt werden, Verwenden einer Vorhersagetextsoftware, um eines der Zeichen auszuwählen.

3. Verfahren nach Anspruch 2, ferner umfassend:
Bereitstellen der Vorhersagetextsoftware mit einem Hinweis, dass die Stelle sich näher an einem der ermittelten Zeichen als an anderen der ermittelten Zeichen befindet.

4. Verfahren nach Anspruch 2, ferner umfassend:
Bereitstellen der Vorhersagetextsoftware mit einem Hinweis, wieviel näher sich die Stelle an einem der ermittelten Zeichen als an anderen der ermittelten Zeichen befindet.

5. Computerlesbares Medium, das einen computerlesbaren Code aufweist, der von mindestens einem Prozessor eines Geräts (200) ausführbar ist, um das Verfahren nach einem der vorhergehenden Ansprüche auszuführen.

6. Verfahren nach Anspruch 1, das von einem elektronischen Gerät (200) durchgeführt wird.

7. Elektronisches Gerät (200), umfassend:
eine oder mehrere Touch-Schnittstellen, um eine Berührung von einem Benutzer zu empfangen;
eine Anzeige (202), die eine oder mehrere Reihen von Zeichen anzeigt;
einen Mikroprozessor (902), der konfiguriert ist, um:
Bereiche (821-826) der einen oder mehreren Touch-Schnittstellen den Zeichen zuzuordnen, wobei mindestens einige der Bereiche (821-826) einander überlappen, um Zwischenbereiche zu bilden, die mehr als ein Zeichen darstellen;
zu ermitteln (700), welche Zeichen den Bereichen (821-826) der einen oder mehreren Touch-Schnittstellen, die eine Stelle der Berührung aufweisen, zugeordnet sind;
wobei, für ein erstes Zeichen, ein Bereich (821-826) der einen oder mehreren Touch-Schnittstellen, die dem ersten Zeichen zugeordnet sind, durch das Verbinden der Mitten von Zeichen, die sich am nächsten am ersten Zeichen befinden, begrenzt wird.

8. Elektronisches Gerät (200) nach Anspruch 7, wobei die eine oder mehrere Touch-Schnittstellen ein einzelnes Touchpad ist/sind.

9. Elektronisches Gerät (200) nach Anspruch 7, wobei die Reihen von Zeichen in einer ausreichenden vertikalen Entfernung beabstandet sind, sodass es keine Unklarheit darüber gibt, welche Reihe von Zeichen berührt wird.

10. Elektronisches Gerät (200) nach Anspruch 7, wobei die eine oder mehrere Touch-Schnittstellen zwei oder mehrere Touchpads sind.

11. Elektronisches Gerät (200) nach Anspruch 7, wobei die eine oder mehrere Touch-Schnittstellen ein einzelner Touchscreen (204) ist.

12. Elektronisches Gerät (200) nach Anspruch 7, wobei die Reihen von Zeichen in einer ausreichenden vertikalen Entfernung beabstandet sind, sodass es keine Unklarheit darüber gibt, welche Reihe von Zeichen berührt wird.

13. Elektronisches Gerät (200) nach Anspruch 7, wobei, für ein erstes Zeichen, ein Bereich des Touchscreens (204), der dem ersten Zeichen zugeordnet ist, von einem Bereich des Touchscreens (204), der einem unterschiedlichen Zeichen einer benachbarten Reihe zugeordnet ist, überlappt wird.

## Revendications

1. Procédé consistant à :
associer des zones (821 à 826) d'une interface tactile d'un dispositif électronique mobile(200) à des caractères, dans lequel au moins certaines des zones associées (821 à 826) se chevauchent pour former des régions intermédiaires qui représentent plus d'un caractère ;
détecter (700) une position d'un effleurement sur l'interface tactile ;
pour chaque zone (821 à 826) de l'interface tactile qui comprend la position, identifier le caractère qui lui est associé ;
dans lequel, pour un premier caractère, l'association consiste à associer une zone (821 à 826) de l'interface tactile au premier caractère par liaison des centres de caractères les plus proches du premier caractère.

2. Procédé selon la revendication 1, consistant en outre à : lors de l'indentification de deux caractères ou plus, utiliser un logiciel de texte prédictif pour sélectionner l'un des caractères.

3. Procédé selon la revendication 2, consistant en outre à : donner au logiciel de texte prédictif une indication du fait que la position est plus proche de l'un des caractères identifiés que d'autres des caractères identifiés.

4. Procédé selon la revendication 2, consistant en outre à : donner au logiciel de texte prédictif une indication de valeur de proximité plus prononcée de la position avec l'un des caractères identifiés plutôt qu'avec d'autres des caractères identifiés.

5. Support lisible par ordinateur comportant un code lisible par ordinateur exécutable par au moins un processeur d'un dispositif (200) pour mettre en oeuvre le procédé selon l'une quelconque des revendications précédentes.

6. Procédé selon la revendication 1, mis en oeuvre par un dispositif électronique (200).

7. Dispositif électronique (200), comprenant :
une ou plusieurs interfaces tactiles servant à recevoir un effleurement d'un utilisateur ;
un afficheur (202) qui affiche une ou plusieurs rangées de caractères ;
un microprocesseur (902) configuré pour :
associer des zones (821 à 826) de l'interface tactile ou des interfaces tactiles aux caractères, dans lequel au moins certaines des zones (821 à 826) se chevauchent pour former des régions intermédiaires qui représentent plus d'un caractère ;
identifier (700) les caractères associés aux zones (821 à 826) de l'interface tactile ou des interfaces tactiles qui comprennent une position de l'effleurement ;
dans lequel, pour un premier caractère, une zone (821 à 826) de l'interface tactile ou des interfaces tactiles associée au premier caractère est délimitée par liaison des centres de caractères les plus proches du premier caractère.

8. Dispositif électronique (200) selon la revendication 7, dans lequel l'interface tactile ou les interfaces tactiles sont constituées d'un pavé tactile unique.

9. Dispositif électronique (200) selon la revendication 7, dans lequel les rangées de caractères sont espacées de distances verticales suffisantes pour qu'il n'y ait pas d'ambiguïté par rapport à la rangée de caractères qui fait l'objet d'un effleurement.

10. Dispositif électronique (200) selon la revendication 7, dans lequel l'interface tactile ou les interfaces tactiles sont constituées de deux pavés tactiles, ou plus.

11. Dispositif électronique (200) selon la revendication 7, dans lequel l'interface tactile ou les interfaces tactiles sont constituées d'un écran tactile unique (204).

12. Dispositif électronique (200) selon la revendication 7, dans lequel les rangées de caractères sont espacées de distances verticales suffisantes pour qu'il n'y ait pas d'ambiguïté par rapport à la rangée de caractères qui fait l'objet d'un effleurement.

13. Dispositif électronique (200) selon la revendication 7, dans lequel, pour un premier caractère, une zone de l'écran tactile (204) associée au premier caractère fait l'objet d'un chevauchement par une zone de l'écran tactile (204) associée à un caractère différent d'une rangée adjacente.
